# EUROPÄISCHE PATENTSCHRIFT

(11) **EP 1 870 787 B1**
(45) Veröffentlichungstag und Bekanntmachung des Hinweises auf die Patenterteilung: **14.04.2010**
(21) Anmeldenummer: 06012658.8
(22) Anmeldetag: 20.06.2006
(51) Int. Cl.: G05B 19/048, G05B 19/05

(54) **Verfahren zur Überwachung eines zyklischen Steuerungsprogramms**
Method for monitoring a cyclic control program
Méthode de surveillance d'un programme cyclique de commande

(43) Veröffentlichungstag der Anmeldung: 26.12.2007
(73) Patentinhaber: SIEMENS AKTIENGESELLSCHAFT, 80333 München (DE)
(72) Erfinder: Opaterny, Thilo, 90453 Nürnberg (DE)

(56) Entgegenhaltungen:
- EP-B1- 1 119 801
- WO-A2-2004/015564
- DE-A1- 10 107 134
- US-A- 6 094 729
- US-A1- 2005 060 690

## Beschreibung

Die Erfindung betrifft ein Verfahren zur Überwachung eines zyklischen Anwenderprogramms, das auf einem Automatisierungsgerät ausgeführt wird, mittels eines mit dem Automatisierungsgerät kommunikativ verbundenen Programmiergerätes, wobei ein Überwachungsauftrag vom Programmiergerät an das Automatisierungsgerät gesendet wird und der Überwachungsauftrag Befehlsnummern der zu überwachenden Befehle sowie dazugehörige Variablen enthält.

Ein derartiges Verfahren kommt auf dem Gebiet der Automatisierungstechnik zum Einsatz. Ein Automatisierungssystem dient zur Lösung einer Steuerungsaufgabe oder übernimmt die Regelung eines Prozesses. Es liest die Werte von Sensoren und Bedienelementen ein und verarbeitet diese mit internen Zuständen zu Ausgabewerten für Aktoren. Ein modernes Automatisierungssystem besteht zu einem wesentlichen Teil aus Software, damit es von den Anwendern an die Aufgabe angepasst werden kann.

Die Programmierung eines Automatisierungssystems unterscheidet sich von der Programmierung anderer Bereiche. Z.B. hat das Programm, das den Monatsabschluss einer Buchhaltung durchführt, einen klaren Beginn und ein klares Ende mit einer kurzen Laufzeit. Es muss dafür Sorge getragen werden, dass es erst in einem Monat wieder aktiv werden kann. Soll ein Automatisierungssystem z.B. einen Aufzug steuern, so bleibt das Programm in Betrieb, solange der Aufzug in Betrieb ist. Die Länge der beiden Programme mag in etwa gleich sein, die Laufzeit und die Randbedingungen unterscheiden sich jedoch wesentlich. Das Programm wird von der Firmware des Automatisierungssystems ständig wiederholt. Bei Automatisierungssystemen spricht man von zyklischer Programmierung. Die Laufzeit muss kurz sein, da diese in etwa der Reaktionszeit der Steuerung entspricht.

Die Programmierung des Automatisierungssystems findet normalerweise nicht auf dem Automatisierungssystem statt, da es keinen Bildschirm und keine Tastatur hat - außer es benötigt diese für die Lösung der Steuerungsaufgabe. Normalerweise wird ein Programmiergerät verwendet, das in der Regel aus einem handelsüblichen PC mit einer Verbindungsmöglichkeit zum Automatisierungssystem und der nötigen Software besteht. Nach der Erstellung des Programms wird dieses auf das Automatisierungssystem übertragen und dort zur Ausführung gebracht. Der Anwender programmiert die Lösung seiner Steuerungsaufgabe in Programmiersprachen, wie sie z.B. in der IEC 1131-3 beschrieben sind.

Bei der Inbetriebnahme eines Automatisierungssystems kommt man in Situationen, das Programm beobachten zu wollen. Wobei dieses Beobachten im laufenden Betrieb mit minimalem Eingriff in das laufende Programm vonstatten gehen soll, also nicht so, wie das auf einem PC gehandhabt wird. Über die Verbindung zwischen Programmiergerät und Automatisierungssystem werden Aufträge an das Automatisierungssystem übermittelt, dort ausgeführt und das Ergebnis wieder zum Programmiergerät übertragen.

In EP 1 119 801 B1 wird ein Protokoll beschrieben, das die Überwachung der Ausführung der Maschinenbefehle des Automatisierungssystems ermöglicht. Die zum Beobachten auf dem Programmiergerät laufende Software, kurz der Debugger, ordnet die beobachteten Werte an den Maschinenbefehlen wieder den Sprachkonstrukten zu. Das setzt voraus, dass die zur Beobachtung des Programmes notwendigen Maschinenbefehle für das Sprachkonstrukt auf dem Programmiergerät bekannt sind.

In WO 2004/015564 A2 wird ein Verfahren beschrieben, wie das Debugging realisiert werden kann, auch wenn die konkrete Implementierung der Maschinenbefehle durch einen Standardcontroller nicht bekannt ist. Die beschriebenen Verfahren haben den Nachteil, dass bei nur sporadisch durchlaufenden Befehlen tendenziell nichts aufgezeichnet wird. Dies liegt vor allem daran, dass die Programmiergeräte Betriebssysteme mit Fenstern und Multitasking verwenden, wie am Beispiel eines Windows-PCs gezeigt werden soll.

Die Kommunikationsmöglichkeiten eines Windows-PC sind auf der einen Seite sehr vielfältig, auf der anderen Seite aber ist dessen Reaktionsverhalten dürftig. Windows-Programme müssen mit einer Ereigniswarteschlange pro Fenster auskommen. Alle Ereignisse für dieses Fenster reihen sich in diese eine Warteschlange ein. Es wird der Reihe nach ein Ereignis nach dem anderen aus dieser Warteschlange bearbeitet. Egal, welcher Kommunikationsweg verwendet wird, letztendlich wird alles über diese Ereigniswarteschlange synchronisiert. Das hat nun die üble Folge, dass die Zahl der Ereignisse pro Sekunde für eine zusätzliche Aufgabe wie das Debugging nicht größer werden darf, als die Frequenz, mit der Tastatur und Maus abgefragt werden. Überschreitet man diese Grenze geringfügig, reagiert der Windows-PC zäh, die Maus fängt an zu springen. Überschreitet man diese Grenze deutlich, dann reagiert der Rechner nur noch hochsporadisch auf Benutzereingaben. Dies muss vermieden werden. Die wichtigste Nebenaufgabe aller Treiberprogrammierer ist es, dass die nötigen Daten durch das System geschleust werden, aber die Zahl der Ereignisse zur Synchronisation mit dem Fenstersystem niedrig bleibt. Dieses Problem trifft somit auf alle Systeme mit Fenstern und Multitasking zu und ist nicht nur bei Windows anzutreffen.

Für das Debugging von Automatisierungssystemen stellt sich dieser Themenkomplex nun so dar: Auf dem Automatisierungssystem läuft ein Programm. Eine bestimmt Folge von Befehlen soll überwacht werden. Für diese Folge von Befehlen wird ein Überwachungsauftrag vom Programmiergerät an das Automatisierungsgerät übertragen. Wenn die betreffenden Befehle durchlaufen werden, so werden die angeforderten Daten einmal aufgezeichnet. Danach wird der Überwachungsauftrag blockiert. Die aufgezeichneten Daten werden an das Programmiergerät übertragen. Die empfangenen Daten werden durch die verschiedenen Treiberschichten geschleust. Irgendwann sind sie dann soweit bearbeitet, dass sie ausgegeben werden könnten. Dazu muss ein Ereignis an ein Fenster gesendet werden. Dieses wird wiederum an eine Methode verteilt, welche die Daten letztendlich so aufbereitet, dass das Fenster neu gezeichnet werden kann. Damit stellt das Programmiergerät die Daten dar, der Anwender kann sie sehen. Damit das System bedienbar bleibt, wird nun mindestens eine Tastaturabfrage abgewartet, bevor vom Programmiergerät eine Freigabe für den Überwachungsauftrag an das Automatisierungsgerät gesendet wird. Wenn die betroffenen Befehle danach durchlaufen werden, beginnt das Spiel von neuem.

Die hier beschriebene Flusskontrolle hat nun die erwünschte Folge, dass das Programmiergerät bedienbar bleibt. Wird eine Befehlssequenz auf dem Automatisierungssystem öfter durchlaufen, als die Reaktionszeit der Flusskontrolle ist, dann kann nicht jeder Durchlauf beobachtet werden. Dies stellt eigentlich kein Problem dar. Die Tastaturabfrage geschieht typischerweise 60mal pro Sekunde. Im Idealfall bekommt man 60 - typischerweise ein drittel davon, also 20 - Datenpakete pro Sekunde dargestellt. In dieser Geschwindigkeit kann kein Mensch alles lesen.

Das Problem entsteht bei sporadisch durchlaufenen Befehlen. Beispiel: In ST (Strukturierter Text, eine der IEC 1131-Sprachen) wurde ein IF-THEN-ELSE programmiert. Die Bedingung sei aber nur bei jedem hundertsten Durchlauf erfüllt, d.h. der THEN-Zweig wird nur bei jedem hundertsten Durchlauf ausgeführt, während die Bedingung jedes Mal durchlaufen wird. Gehen wir weiter davon aus, dass das IF-THEN-ELSE 1000mal pro Sekunde ausgeführt wird. Bei 20 Aufzeichnungen pro Sekunde gehen 980 Durchläufe verloren. In dieser Zeit gab es nur 10 Möglichkeiten, auch den THEN-Zweig zu beobachten. Also hat man im Mittel nur 0,2mal die Befehle des THEN aufgezeichnet. Was praktisch bedeutet, dass man den THEN-Zweig erst nach mehreren Sekunden oder überhaupt nicht zu Gesicht bekommt.

In der Praxis sind es aber oft die selten durchlaufenen Zweige eines Programmes, die Probleme bereiten, da sie irgendwelche Ausnahmen behandeln. Gerade die aber kann man sehr schlecht beobachten.

Der Erfindung liegt die Aufgabe zugrunde, ein Verfahren anzugeben, mit dem auch die selten durchlaufenen Zweige eines zyklischen Anwenderprogramms, das auf einem Automatisierungsgerät ausgeführt wird, problemlos beobachtet werden können.

Diese Aufgabe wird bei einem Verfahren der eingangs genannten Art dadurch gelöst, dass bei Ausführung eines Befehls die zu den Variablen gehörigen Daten mit entsprechender Befehlsnummer und einem ersten Zählerwert, der direkt oder indirekt die Daten einem Zyklus des Anwenderprogramms zuordnet, vom Automatisierungsgerät in einem Aufzeichnungspuffer gespeichert werden, dass bei erneuter Ausführung des Befehls die alte Aufzeichnung der dazugehörigen Daten einschließlich des ersten Zählerwertes überschrieben wird und dass der Aufzeichnungspuffer auf Aufforderung des Programmiergerätes vom Automatisierungsgerät ausgebbar ist.

Durch die Speicherung der zu den Befehlen gehörigen Daten im Aufzeichnungspuffer gehen auch die Daten zu selten durchlaufenen Befehlen nicht verloren, sondern sind auf Aufforderung vom Programmiergerät ausgebbar, können von diesem dargestellt und somit problemlos von einem Anwender beobachtet werden. Im Gegensatz zu den bekannten Verfahren wird der Überwachungsauftrag weder blockiert, noch sendet er ohne Aufforderung Daten an das Programmiergerät. Wird ein Befehl ein weiteres Mal ausgeführt, so überschreibt er seine alte Aufzeichnung. Somit sind nach einiger Zeit alle jemals durchlaufenen Befehle im Aufzeichnungspuffer. Sie können dabei unterschiedliche erste Zählerwerte haben, d.h. zu unterschiedlichen Zyklen des Anwenderprogramms durchlaufen worden sein. Die Flusskontrolle wird wiederum durch das Programmiergerät realisiert. Das Programmiergerät fordert das Automatisierungssystem explizit dazu auf, den Aufzeichnungspuffer auszugeben. Der Aufzeichnungspuffer wird dabei nicht gelöscht.

Für jeden ausgeführten Befehl enthält der Aufzeichnungspuffer die Befehlsnummer, den ersten Zählerwert und die Werte der dazugehörigen Daten. Wird ein Befehl überhaupt nicht ausgeführt, so findet sich für ihn kein Eintrag im Aufzeichnungspuffer.

Für den ersten Zählerwert eignet sich z.B. ein Zähler, der bei jedem Zyklus oder sogar nur bei einem Teil davon erhöht wird. Eine andere Möglichkeit wäre ein Zähler, der bei jeder Aufzeichnung erhöht wird, d.h. wird ein Programmteil in einem Zyklus nicht durchlaufen, so wird auch der Zähler nicht erhöht. Eine echte Uhrzeit ist nicht nötig, denn es soll nur erkannt werden, ob die Daten aus dem gleichen Zyklus sind.

In einer vorteilhaften Ausführungsform werden für noch nicht ausgeführte zu überwachende Befehle im Aufzeichnungspuffer Befehlsnummer und ein zweiter Zählerwert gespeichert und Speicherplatz für die dazugehörigen Daten reserviert, wobei der zweite Zählerwert kennzeichnet, dass der betreffende Befehl noch nicht ausgeführt wurde. Diese Vorgehensweise führt im allgemeinen zu einem etwas längeren Aufzeichnungspuffer, ist allerdings leichter weiterzuverarbeiten.

In einer weiteren vorteilhaften Ausführungsform ist der zweite Zählerwert mit dem ersten Zählerwert identisch. Dies kann z.B. dadurch realisiert werden, dass der erste Zählerwert die Zyklusnummer des Anwenderprogramms zählt und für noch nicht ausgeführte Befehle die Zyklusnummer "0" gespeichert wird.

In einer weiteren vorteilhaften Ausführungsform erfolgt die Zuordnung des ersten Zählerwertes zum jeweiligen Zyklus des Anwenderprogramms mittels einer Tabelle. In dieser Tabelle kann beispielsweise eine Zuordnung von relativer Zyklusnummer zu absoluter Zyklusnummer gespeichert sein.

In einer weiteren vorteilhaften Ausführungsform erfolgt eine Zuordnung des ersten Zählerwertes zur Realzeit mittels einer Tabelle. Auch hierdurch ist natürlich ersichtlich, welche Befehle im gleichen Zyklus des Anwenderprogramms durchlaufen wurden, während man noch die Zusatzinformation erhält, wann der entsprechende Zyklus ausgeführt wurde.

In einer weiteren vorteilhaften Ausführungsform werden die Daten anhand des ersten Zählerwertes im Programmiergerät entsprechend ihrer Aktualität dargestellt. So kann ein Anwender leicht erkennen, welche Daten gerade aktuell sind und welche nicht mehr gültig sind. Z.B. könnten die veralteten Daten schrittweise ausgeblendet werden - je älter die Daten, desto blasser die Farbe.

In einer weiteren vorteilhaften Ausführungsform weist der Überwachungsauftrag einen Trigger auf, durch den ein Abbild des Aufzeichnungspuffers in einem zweiten Puffer gesichert wird. So könnte man einen Trigger beispielsweise so formulieren, dass der Aufzeichnungspuffer gesichert wird, wenn ein sporadisch durchlaufener Befehl ausgeführt wird. Dadurch kann man auch die selten auftretenden Bedingungen und die zu ihrer Entstehung vorhandenen Werte ermitteln.

Im Folgenden wird die Erfindung anhand der in den Figuren dargestellten Ausführungsbeispiele näher beschrieben und erläutert. Es zeigen:
- FIG 1: ein Codefragment von zu überwachenden Befehlen in ST (Strukturiertem Text),
- FIG 2: das Codefragment aus Fig 1, übersetzt in eine AWL (Anweisungsliste),
- FIG 3: die sich aus der AWL aus Fig 2 ergebende Anforderung an das Automatisierungsgerät,
- FIG 4: die aufgrund der Anforderung aus Fig 3 in einem Aufzeichnungspuffer gespeicherten Werte,
- FIG 5: eine Tabelle zur Zuordnung des ersten Zählerwertes zur Realzeit und
- FIG 6: ein in einem zweiten Puffer gesichertes Abbild des Aufzeichnungspuffers.

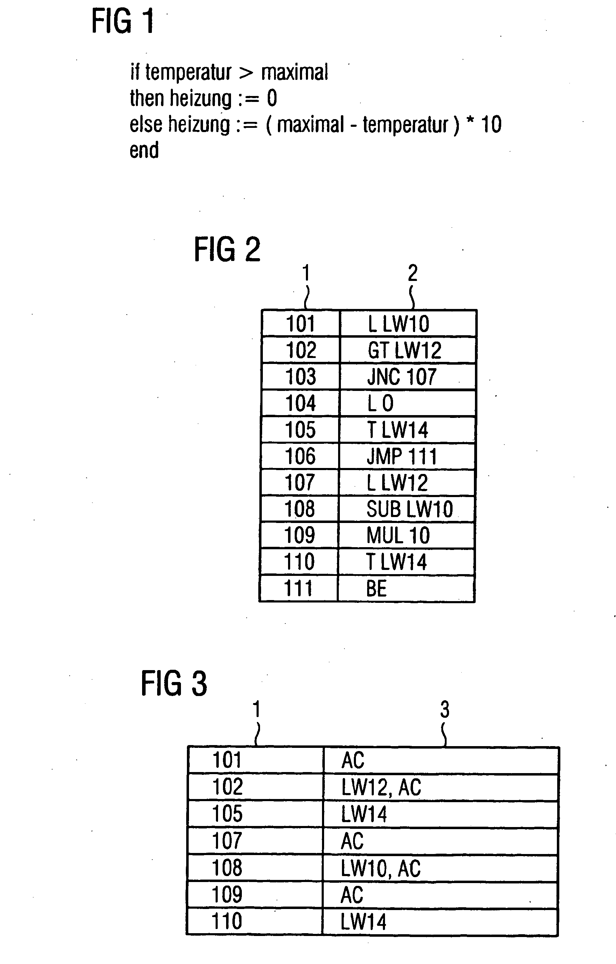

Fig 1 zeigt ein in ST (Strukturierten Text) geschriebenes Codefragment von Befehlen, deren Ausführung im Automatisierungsgerät überwacht werden soll. Das Beispiel zeigt eine einfache IF-THEN-ELSE-Schleife eines Programms zur Steuerung einer Heizung, wobei die Heizung abgeschaltet wird, wenn der aktuelle Temperaturwert einen parametrierbaren Maximalwert übersteigt, oder andernfalls auf einen in Abhängigkeit vom Maximalwert zu bestimmenden Wert geregelt wird.

Fig 2 zeigt das Codefragment der Figur 1, übersetzt in eine Anweisungsliste (AWL) für ein Automatisierungsgerät. Diese besteht aus einer Reihe von Befehlen 2, die in der Reihenfolge ihrer Abarbeitung durchnumeriert sind, und den resultierenden Befehlsnummern 1. Zum Verständnis der folgenden Figuren sollen nun die Befehle 2 kurz erläutert werden: Befehl 101 lädt den Wert der Variablen LW10, die die aktuelle Temperatur angibt, in den Akkumulator (Akku1). Befehl 102 vergleicht den Wert in Akku1 mit dem Wert der Variablen LW12, dem parametrierbaren Maximalwert. Befehl 103 ist ein konditionaler Sprungbefehl, die Befehl 104 und 105 bilden den in Fig 1 gezeigten THEN-Zweig: 104 lädt den Wert "0" in Akku1 und 105 weist den in Akku1 gespeicherten Wert der Variablen LW14 zu, also der "heizung" der Fig 1. Mit Befehl 107 beginnt der in Fig 1 abgebildete ELSE-Zweig: Lade den Maximalwert LW12 in Akkul (107), subtrahiere die aktuelle Temperatur (108), multipliziere mit "10" (109) und weise das Ergebnis der Variablen "heizung", LW14, zu (110). Um nun das Verhalten des Automatisierungsgerätes zu beobachten, genügt es, die sich ändernden Werte der Variablen zu überwachen. Der an das Automatisierungsgerät gesendete Überwachungsauftrag beinhaltet also die Befehlsnummern 1 der Befehle 2, die auf Variablen 3 zugreifen, sowie die entsprechenden Variablen 3 selbst.

Fig 3 zeigt die vom Programmiergerät an das Automatisierungsgerät gesendete Anforderung. Diese enthält die Befehlsnummern 1 der Befehle 2, die auf Variablen 3 zugreifen, sowie die entsprechenden Variablen 3 selbst. Dabei steht "AC" für den aktuell im Akkumulator Akku1 gespeicherten Wert. Die hier nicht aufgeführten Befehle 2, wie z.B. die Sprungbefehle, berühren nicht die Werte der Variablen 3.

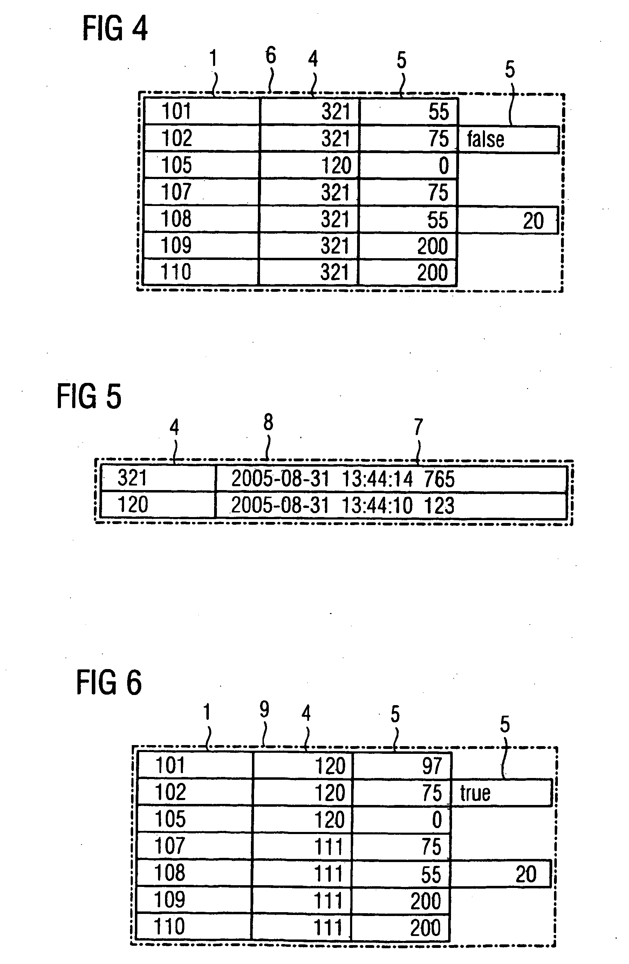

Fig 4 zeigt die aufgrund der Anforderung aus Fig 3 in einem Aufzeichnungspuffer 6 gespeicherten Werte. Dieses sind die betreffenden Befehlsnummern 1 sowie die dazugehörigen Daten 5, d.h. die angeforderten Werte der Variablen 3. Zudem wird zu jedem Befehl ein erster Zähler 4 gespeichert, der in diesem Beispiel direkt die Zyklusnummer des auf dem Automatisierungsgerät ausgeführten Anwenderprogramms angibt. D.h. die Befehle 101, 102 und 107 bis 110 wurden in Zyklus Nummer 321 ausgeführt, wohingegen der Befehl 105 das letzte Mal in Zyklus 120 durchlaufen wurde. Befehl 105 stellt also einen der besagten sporadischen Befehle dar, die mit den herkömmlichen Verfahren nicht oder nur zu unbestimmter Zeit zufällig beobachtet werden können. Dadurch, dass die beobachteten Befehle 2 immer aufgezeichnet werden, gehen auch die Werte 5 von höchst selten durchlaufenen Befehlen 2 nicht verloren.

Fig 5 zeigt eine Tabelle 8, die den ersten Zählerwerten 4 jeweils einen Zeitstempel 7 zuordnet. Die genaue Ausgestaltung der Zeitstempel 7 kann dabei offen bleiben, wichtig ist nur, dass man die Reihenfolge wieder herstellen kann. Durch die Zeitstempel 7 im Aufzeichnungspuffer 6 kann eine gute Aussage über die Gültigkeit der Werte 5 gemacht werden.

Fig 6 zeigt ein in einem zweiten Puffer 9 gesichertes Abbild des Aufzeichnungspuffers 6, dessen Erzeugung durch einen Trigger im Überwachungsauftrag ausgelöst wurde. Im Beispiel wurde der Trigger so formuliert, dass der Aufzeichnungspuffer 6 gesichert wird, wenn Befehl 105 durchlaufen wird. Der gesicherte Puffer 9 enthält neben den Werten der Befehle 101 und 102 zur Zyklusnummer 120 auch die Werte der Befehle 107 bis 110 zu früheren Zeitpunkten. Aus diesen Werten 4, 5 kann man sehen, wie lange bzw. oft der THEN-Zweig durchlaufen wurde. Durch den besonderen Trigger kann man auch die selten auftretenden Bedingungen und die zu ihrer Entstehung vorhandenen Werte 5 ermitteln.

Zusammenfassend betrifft die Erfindung ein Verfahren zur Überwachung eines zyklischen Anwenderprogramms, das auf einem Automatisierungsgerät ausgeführt wird, mittels eines mit dem Automatisierungsgerät kommunikativ verbundenen Programmiergerätes, wobei ein Überwachungsauftrag vom Programmiergerät an das Automatisierungsgerät gesendet wird und der Überwachungsauftrag Befehlsnummern der zu überwachenden Befehle sowie dazugehörige Daten enthält. Der Erfindung liegt die Aufgabe zugrunde, ein Verfahren anzugeben, mit dem auch die selten durchlaufenen Zweige des Anwenderprogramms problemlos beobachtet werden können. Diese Aufgabe wird dadurch gelöst, dass bei Ausführung eines Befehls die dazugehörigen Daten mit entsprechender Befehlsnummer und einem ersten Zählerwert, der direkt oder indirekt die Daten einem Zyklus des Anwenderprogramms zuordnet, vom Automatisierungsgerät in einem Aufzeichnungspuffer gespeichert werden, dass bei erneuter Ausführung des Befehls die alte Aufzeichnung der dazugehörigen Daten einschließlich des ersten Zählerwertes überschrieben wird und dass der Aufzeichnungspuffer auf Aufforderung des Programmiergerätes vom Automatisierungsgerät ausgebbar ist.

## Patentansprüche

1. Verfahren zur Überwachung eines zyklischen Anwenderprogramms, das auf einem Automatisierungsgerät ausgeführt wird, mittels eines mit dem Automatisierungsgerät kommunikativ verbundenen Programmiergerätes, wobei ein Überwachungsauftrag vom Programmiergerät an das Automatisierungsgerät gesendet wird und der Überwachungsauftrag Befehlsnummern (1) der zu überwachenden Befehle (2) sowie dazugehörige Variablen (3) enthält,
**dadurch gekennzeichnet,**
- **dass** bei Ausführung eines Befehls (2) die zu den Variablen (3) gehörigen Daten (5) mit entsprechender Befehlsnummer (1) und einem ersten Zählerwert(4), der direkt oder indirekt die Daten (5) einem Zyklus des Anwenderprogramms zuordnet, vom Automatisierungsgerät in einem Aufzeichnungspuffer (6) gespeichert werden,
- **dass** bei erneuter Ausführung des Befehls (2) die alte Aufzeichnung der dazugehörigen Daten (5) einschließlich des ersten Zählerwertes (4) überschrieben wird und
- **dass** der Aufzeichnungspuffer (6) auf Aufforderung des Programmiergerätes vom Automatisierungsgerät ausgebbar ist.

2. Verfahren nach Anspruch 1,
wobei für noch nicht ausgeführte zu überwachende Befehle (2) im Aufzeichnungspuffer (6) Befehlsnummer (1) und ein zweiter Zählerwert gespeichert werden und Speicherplatz für die dazugehörigen Daten (5) reserviert wird, wobei der zweite Zählerwert kennzeichnet, dass der betreffende Befehl (2) noch nicht ausgeführt wurde.

3. Verfahren nach Anspruch 2,
wobei der zweite Zählerwert mit dem ersten Zählerwert (4) identisch ist.

4. Verfahren nach einem der vorhergehenden Ansprüche,
wobei die Zuordnung des ersten Zählerwertes (4) zum jeweiligen Zyklus des Anwenderprogramms mittels einer Tabelle erfolgt.

5. Verfahren nach einem der vorhergehenden Ansprüche,
wobei eine Zuordnung des ersten Zählerwertes (4) zur Realzeit mittels einer Tabelle (8) erfolgt.

6. Verfahren nach einem der vorhergehenden Ansprüche,
wobei anhand des ersten Zählerwertes (4) die Daten (5) im Programmiergerät entsprechend ihrer Aktualität dargestellt werden.

7. Verfahren nach einem der vorhergehenden Ansprüche,
wobei der Überwachungsauftrag einen Trigger aufweist, durch den ein Abbild des Aufzeichnungspuffers (6) in einem zweiten Puffer (9) gesichert wird.

## Claims

1. Method for monitoring a cyclic user program, which is executed on an automation device, by means of a programming device communicatively connected to the automation device, a monitoring mandate being sent from the programming device to the automation device and the monitoring mandate containing command numbers (1) of the commands (2) to be monitored and associated variables (3),
**characterised in that**
- on execution of a command (2) the data (5) associated with the variables (3) is stored with corresponding command numbers (1) and a first counter value (4), which assigns the data (5) directly or indirectly to a cycle of the user program, in a recording buffer (6) by the automation device,
- on subsequent execution of the command (2) the old recording of the associated data (5) including the first counter value (4) is overwritten and
- the recording buffer (6) can be output by the automation device at the request of the programming device.

2. Method according to claim 1,
wherein command numbers (1) and a second counter value are stored in the recording buffer (6) for commands (2) to be monitored that have not yet been executed and storage space is reserved for the associated data (5), the second counter value identifying that the command (2) in question has not yet been executed.

3. Method according to claim 2,
wherein the second counter value is identical to the first counter value (4).

4. Method according to one of the preceding claims,
wherein the assignment of the first counter value (4) to the respective cycle of the user program takes place by means of a table.

5. Method according to one of the preceding claims,
wherein an assignment of the first counter value (4) to real time takes place by means of a table (8).

6. Method according to one of the preceding claims,
wherein the first counter value (4) is used to display the data (5) in the programming device according to its currency.

7. Method according to one of the preceding claims,
wherein the monitoring mandate has a trigger, which saves a copy of the recording buffer (6) in a second buffer (9).

## Revendications

1. Procédé de contrôle d'un programme d'utilisateur cyclique qui est exécuté sur un appareil d'automatisation, au moyen d'un appareil de programmation relié en communication avec l'appareil d'automatisation, dans lequel un ordre de contrôle est envoyé par l'appareil de programmation à l'appareil d'automatisation et l'ordre de contrôle contient des numéros ( 1 ) des instructions à contrôler ainsi que des variables ( 3 ) associées,
**caractérisé**
- **en ce que**, lors de l'exécution d'une instruction ( 2 ), on mémorise, par l'appareil d'automatisation dans un tampon ( 6 ) d'enregistrement, les données ( 5 ) faisant partie des variables ( 3 ) avec des numéros ( 1 ) d'instruction correspondants et avec un premier décompte ( 4 ), qui associe directement ou indirectement les données ( 5 ) à un cycle du programme utilisateur,
- lors de l'exécution à nouveau de l'instruction ( 2 ), on écrase l'enregistrement ancien des données ( 5 ) associés y compris du premier décompte ( 4 ) et
- **en ce que** le tampon ( 6 ) d'enregistrement peut, sur demande de l'appareil de programmation, être émis par l'appareil d'automatisation.

2. Procédé suivant la revendication 1,
dans lequel, pour des instructions ( 2 ) à contrôler qui ne sont pas encore exécutées, on mémorise dans le tampon ( 6 ) d'enregistrement des numéros ( 1 ) d'instruction et un deuxième décompte et on réserve de la place en mémoire pour les données ( 5 ) associées, le deuxième décompte étant **caractérisé en ce que** l'instruction ( 2 ) concernée n'a pas encore été exécutée.

3. Procédé suivant la revendication 2,
dans lequel le deuxième décompte est identique au premier décompte ( 4 ).

4. Procédé suivant l'une des revendications précédentes,
dans lequel l'association du premier décompte ( 4 ) au cycle respectif du programme utilisateur s'effectue au moyen d'une table.

5. Procédé suivant l'une des revendications précédentes,
dans lequel une association du premier décompte ( 4 ) au temps réel s'effectue au moyen d'une table ( 8 ).

6. Procédé suivant l'une des revendications précédentes,
dans lequel les données dans l'appareil de programmation sont représentées en fonction de leur actualité au moyen du premier décompte ( 4 ).

7. Procédé suivant l'une des revendications,
Dans lequel l'ordre de contrôle a un trigger par lequel une reproduction du tampon ( 6 ) d'enregistrement est assurée dans un deuxième tampon ( 9 ).
